# FASCICULE DE BREVET EUROPEEN

(11) **EP 1 289 282 B1**
(45) Date de publication et mention de la délivrance du brevet: **11.10.2006**
(21) Numéro de dépôt: 01120828.7
(22) Date de dépôt: 29.08.2001
(51) Int. Cl.: H04N 5/232

(54) **Procédé et système de production automatique de séquences vidéo**
Verfahren und System zur automatischen Produktion von Videosequenzen
Video sequence automatic production method and system

(43) Date de publication de la demande: 05.03.2003
(73) Titulaire: Dartfish SA, 1705 Fribourg (CH)
(72) Inventeur: Ayer, Serge, 1753 Matran (CH); Moreaux, Michel, 1070 Puidoux (CH); Volery, Olivier, 1723 Marly (CH)
(74) Mandataire: P&TS Patents & Technology Surveys SA

(56) Documents cités:
- WO-A-00/08856
- US-A- 5 229 850
- US-A- 6 163 338

## Description

La présente invention concerne un procédé et un système de production automatique de séquences vidéo correspondant notamment à des événements sportifs. La présente invention concerne en particulier un procédé et un système de production et de restitution en temps réel ou en différé de séquences vidéo, notamment dans un circuit vidéo fermé.

De nombreux sports ne peuvent être pleinement appréciés que grâce à la vidéo. A cet égard, la qualité de la production, notamment le choix des plans et des traitements d'images est déterminant. Les possibilités de ralenti, de zoomer sur des détails ou d'incruster des données supplémentaires permettent d'observer des événements ou des mouvements difficiles à détecter à l'oeil nu et de comparer les performances de différents sportifs. De telles séquences vidéo sont aussi très utiles lors de l'entraînement des sportifs, afin d'analyser leurs mouvements ou de les comparer à ceux de leurs concurrents ou entraîneurs. C'est notamment le cas pour l'entraînement au sport automobile, où l'analyse de la trajectoire des véhicules dans les virages permet aux coureurs d'améliorer leur technique. C'est également le cas pour l'entraînement à des activités non liées au sport, par exemple pour l'entraînement à la manipulation de machines ou de dispositifs.

Outre les systèmes de prise de vue destinés à la retransmission d'images, notamment en vue d'une diffusion télévisuelle, on connaît aussi des systèmes destinés à acquérir des séquences vidéo et à les restituer en temps réel ou légèrement différé dans un circuit fermé. De tels systèmes sont notamment utilisés pour l'entraînement ou pour acquérir automatiquement des images restituées sur grand écran pour les spectateurs d'une manifestation sportive. Pour des raisons économiques évidentes, on souhaite utiliser des systèmes capables de prendre des prises de vues et de les restituer sans l'intervention d'un caméraman ou d'un opérateur. Les caméras sont donc généralement montées de manière fixe ou motorisées et acquièrent des séquences vidéo qui sont enregistrées ou directement diffusées, par exemple dans un circuit vidéo fermé.

Certains systèmes de prise de vue comportent des déclencheurs qui permettent de déclencher automatiquement l'acquisition d'une séquence vidéo. Il a par exemple déjà été suggéré d'enclencher des caméras automatiquement ou de les remettre en stand-by lorsqu'un capteur détecte l'approche puis le départ d'un compétiteur de la scène filmée. De telles solutions sont décrites notamment dans WO-A-00/08856 et dans US-A-5229850.

Les systèmes d'acquisition et de restitution de séquences vidéo en circuit fermé n'offrent généralement pas de possibilités de production. Les images acquises sont destinées à être immédiatement restituées telles quelles et sans traitement numérique préalable sur des écrans. Un opérateur humain peut éventuellement effectuer des opérations de production simples, par exemple pour sélectionner la caméra affichée sur chaque moniteur. Les possibilités sont toutefois limitées et requièrent l'intervention d'un opérateur humain lors du tournage ou de la production.

Un but de l'invention est donc de proposer un nouveau système et un nouveau procédé de production automatique, qui offrent davantage de flexibilité pour la production de séquences vidéo tout en limitant le nombre d'interventions humaines au cours de la production.

Un autre but est de proposer un nouveau système et un nouveau procédé de production automatique qui offrent de nouvelles possibilités de production et de traitement de séquences vidéo, difficiles ou coûteuses à réaliser avec des systèmes et des procédés traditionnels.

Un autre but est de proposer un nouveau système et un nouveau procédé de production automatique qui permettent de filmer plusieurs sportifs ou personnes qui traversent successivement la même scène et de comparer leurs déplacements et leurs prestations.

Un autre but est de proposer un nouveau système et un nouveau procédé de production automatique de séquences vidéo qui permettent de définir à l'avance le "story-board", c'est-à-dire la succession des séquences acquises et restituées ainsi que des traitements numériques effectués sur ces différents plans. Le story-board comporte de préférence au mois une séquence ou au moins un traitement numérique qui dépend d'un signal de déclenchement généré par le comportement du sportif filmé.

Selon l'invention, ces buts sont atteints au moyen d'un système de production comportant les caractéristiques de la revendication 1, des variantes préférentielles étant par ailleurs indiquées dans les revendications dépendant de la revendication 1. Ces buts sont en outre atteints au moyen d'un procédé selon la revendication 29.

L'invention sera mieux comprise à la lecture de la description donnée à titre d'exemple et illustrée par les figures annexées qui montrent:
La figure 1 une vue schématique d'un circuit automobile équipé avec un système de production selon l'invention
La figure 2 un schéma-bloc du système de production selon l'invention.

Les figures 3 à 10 des exemples de trames vidéo destinées à illustrer différents traitements numériques pouvant être effectués sur les séquences vidéo acquises.

La figure 11 un exemple de boîte de dialogue permettant de configurer les caméras montées dans le système.

La figure 12 un exemple de boîte de dialogue permettant de configurer les déclencheurs montés dans le système.

La figure 13 un exemple de boîte de dialogue permettant de définir le story-board, c'est-à-dire la succession de plans enregistrés et restitués, en fonction des signaux fournis par les différents déclencheurs.

La figure 14 un exemple de boîte de dialogue permettant de prédéfinir des séquences vidéo.

Les exemples décrits dans cette demande et illustrés sur les figures s'appliquent plus particulièrement au sport automobile. On comprendra toutefois que le système de l'invention peut aussi être appliqué à la production de séquences vidéo pour d'autres types de sports, notamment pour les sports dans lesquels la position des sportifs et les plans souhaités peuvent être prévus à l'avance, notamment tous les sports dans lesquels les sportifs parcourent un circuit ou une trajectoire prédéfinie, par exemple le cyclisme, la course, le ski ou les sports dans lesquels les sportifs se meuvent dans un espace restreint connu à l'avance, par exemple la gymnastique aux engins, le saut en longueur ou en hauteur, etc. Le système vidéo peut aussi être utilisé pour l'entraînement à des activités non liées au sport.

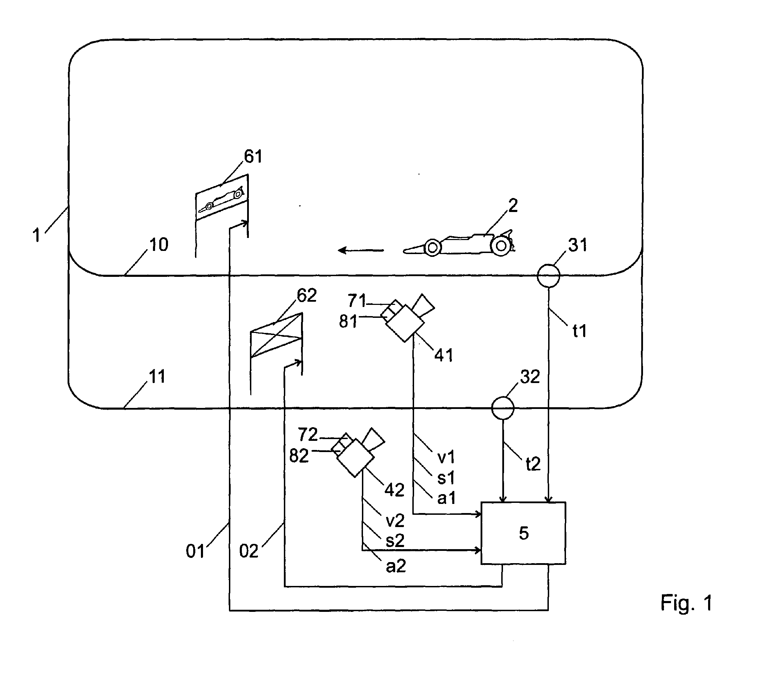

La figure 1 illustre schématiquement un circuit automobile 1 équipé avec un système de production selon l'invention. Le circuit 1 comporte un parcours avec deux possibilités d'embranchements 10,11. Un sportif parcoure ce circuit à bord d'un véhicule 2 et peut choisir l'un des deux embranchements. Le système de production de l'invention comporte plusieurs caméras 41, 42 permettant d'acquérir des séquences vidéo v1, v2 à partir de différentes scènes sur le circuit 1. Dans cet exemple, deux caméras 41, 42 sont prévues. On comprendra cependant que le nombre de caméras peut être modifié en tout temps et sera généralement plus important de manière à filmer de préférence l'ensemble du circuit ou du moins l'ensemble des passages difficiles.

Certaines caméras sont de préférence munies de capteurs 71, 72 fournissant des signaux de capteurs s1, s2 indiquant les conditions de prise de vue, par exemple la luminance et la chrominance de la scène, l'ouverture, la focale et la distance de mise au point utilisées, les mouvements de la caméra effectués, etc. Dans l'exemple illustré, la caméra 41 est munie d'un seul capteur 71 et la caméra 42 d'un seul capteur 72. Les caméras peuvent en outre être munies d'actuateurs 81, 82 permettant de les commander à distance à l'aide de signaux d'actuation a1, a2, par exemple pour commander un déplacement motorisé de la caméra, pour modifier le rapport de zoom ou pour régler la mise au point ou l'ouverture. Les mouvements de la caméra peuvent être préprogrammés ou commandés par le système numérique 5 agissant sur les actuateurs 81, 82. De cette manière, on pourra notamment déplacer la caméra et/ou régler la distance de mise au point pour suivre un objet en mouvement, par exemple à l'aide d'une méthode d'analyse visuelle du contenu de la séquence vidéo ou à l'aide d'une information relative à la position de l'objet filmé fournie par un système de détection de position de type GPS par exemple.

Les signaux s1, s2 des capteurs et les signaux a1, a2 des actuateurs peuvent être multiplexés par dessus les signaux vidéo numériques s1 à sm, par exemple par-dessus une des pistes son, afin de réduire le nombre de câbles entre les caméras et le système de traitement numérique 5. Chaque caméra peut être munie de plusieurs capteurs et/ou actuateurs; il est aussi possible d'avoir certaines caméras dépourvues de capteurs ou d'actuateurs, ou des capteurs qui ne sont pas liés à une caméra particulière. Des actuateurs peuvent aussi être utilisés pour commander des projecteurs d'éclairage de la scène, ou d'autres éléments susceptibles de modifier la prise de vue.

Des dispositifs de restitution de séquences vidéo 61, 62 permettent de restituer en temps réel ou éventuellement en différé les séquences vidéo de sortie o1, o2 acquises par les caméras 41, 42 et traitées par un système de traitement numérique 5.

Dans cet exemple les dispositifs de restitution sont constitués par des écrans orientés vers les sportifs eux-mêmes qui peuvent ainsi s'observer et se comparer à d'autres sportifs lors de l'entraînement. Les dispositifs de restitution pourraient aussi comprendre des écrans géants tournés vers les spectateurs d'une compétition, des enregistreurs pour enregistrer les séquences vidéo produites ou des moniteurs à l'intention du sportif lui-même ou de son entraîneur.

Le système comporte en outre des déclencheurs ("triggers") 31, 32 équipant le circuit 1 et fournissant des signaux de déclenchement t1, t2 en réaction à un événement particulier en relation avec la scène filmée. Dans cet exemple le circuit comprend deux boucles de détection 31, respectivement 32, de passage de véhicule qui génèrent un signal t1, respectivement t2, au passage d'un véhicule en un point précis de l'embranchement 10, respectivement 11. Les signaux de déclenchement t1, t2 sont transmis au système de traitement numérique 5.

D'autres types de déclencheurs peuvent également être prévus selon le type de sport et de production. Tout dispositif fournissant une information relative à la scène filmée et utile pour décider une action d'acquisition, de traitement et/ou de restitution pourra être utilisé comme déclencheur. Par exemple, on peut utiliser des déclencheurs qui génèrent un signal lorsqu'un bruit ou un son particulier est reconnu, par exemple un bruit de frappe de balle dans un sport comme le tennis ou le golf. Des déclencheurs peuvent aussi être montés dans le véhicule 2 ou près du sportif filmé, et comporter par exemple un accéléromètre ou un détecteur de position, par exemple de type GPS (Global Positioning System). Un signal de déclenchement ti sera alors généré lorsque certaines conditions d'accélération, de vitesse ou de position sont remplies. Un signal de déclenchement peut aussi être généré manuellement par le sportif lui-même, par son entraîneur, par un opérateur ou par un circuit d'horloge. Par ailleurs, il est aussi possible de monter des éléments d'identification, par exemple des transpondeurs, sur certains véhicules ou sportifs. Un signal de déclenchement pourra alors être produit de manière sélective lorsqu'un sportif déterminé accompli une action particulière, ce qui permet par exemple de suivre un sportif particulier sur le circuit. Les déclencheurs peuvent aussi être de type visuel et basés sur une analyse des images vidéo acquises. Par exemple, le système de traitement numérique 5 peut générer un signal de déclenchement lorsqu'un sportif passe la ligne de départ ou la ligne d'arrivée d'une course. Enfin, il est aussi possible d'utiliser les signaux des capteurs 71, 72 sur les caméras comme signaux de déclenchement. On pourra ainsi par exemple déclencher l'affichage d'une séquence dès qu'un capteur de mise au point autofocus indique une distance prédéterminée jusqu'au sportif, ou provoquer une fusion avec une séquence vidéo préenregistrée lorsque le capteur indique que l'image est nette.

Il est aussi possible de générer des signaux de déclenchement lorsque des conditions plus complexes, faisant éventuellement intervenir des signaux générés par plusieurs déclencheurs ou capteurs, sont satisfaites. Des routines logicielles exécutées par le système de traitement numérique 5 peuvent être utilisées pour vérifier ces conditions. On pourra ainsi par exemple générer un signal de déclenchement lorsqu'une routine appropriée dans le système de traitement numérique 5 détecte, à l'aide d'informations fournies par un capteur GPS ou par analyse d'image, une scène de dépassement, un accrochage, une sortie de piste, ou tout autre événement digne d'intérêt. Le système permet ainsi d'acquérir, de produire et de restituer automatiquement les scènes clés d'un séance d'entraînement ou d'une compétition.

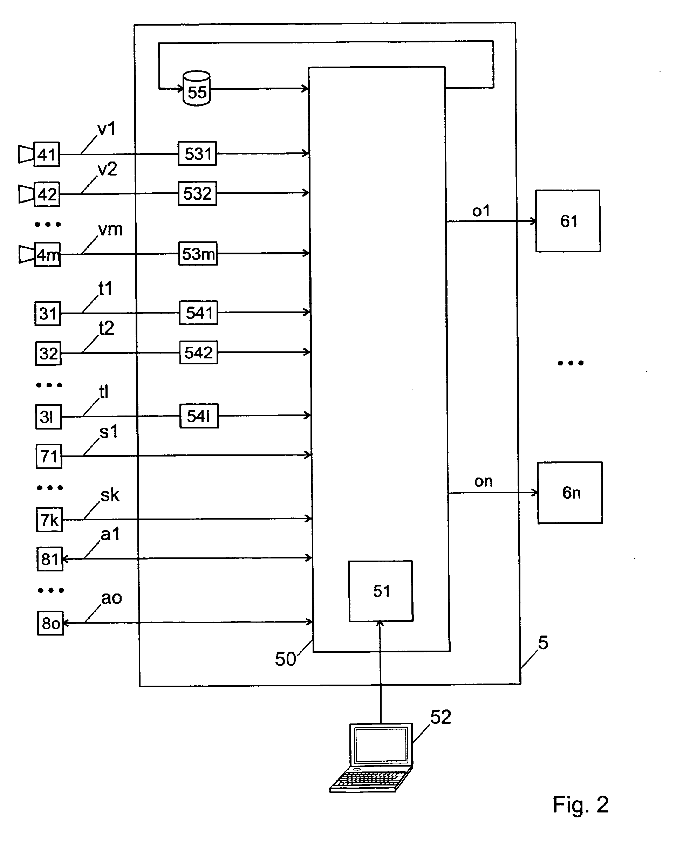

Le système de production de l'invention est décrit de manière plus détaillée à l'aide du schéma-bloc de la figure 2. L'élément central du système de production est constitué par le système de traitement numérique 5, par exemple un ordinateur personnel ou une station de travail. Le système de traitement numérique 5 comporte m entrées pour des signaux vidéo numériques v1 à vm générés par m caméras vidéo numériques 41 à 4m. m tampons 531 à 53m permettent de stocker temporairement les données vidéo délivrées par les caméras 41 à 4m. La taille de chacun des m tampons, c'est-à-dire le nombre de trames stockées, peut de préférence être variée dynamiquement. Les tampons 53 permettent d'enregistrer un "pre-roll", c'est-à-dire un nombre limité de trames parmi lesquels il sera possible de choisir la position de lecture.

Le système de traitement numérique 5 comporte également l entrées numériques pour I signaux de déclenchement t1 à t1 générés par l déclencheurs 31 à 3l. Les I signaux de déclenchement peuvent aussi être multiplexés sur les signaux provenant des caméras 41 à 4m, par exemple multiplexés sur un des canaux son ou sur un canal de donnée prévu à cet effet, cette variante offrant l'avantage de réduire le nombre de câbles qui doivent être tirés jusqu'au système 5. l compteurs 541 à 54l permettent d'insérer d'un délai variable pour l'application des signaux de déclenchement. Comme indiqué plus haut, des signaux de déclenchement peuvent aussi être générés par le système de traitement numérique 5, par exemple lorsqu'un événement particulier est détecté par reconnaissance d'image sur une séquence vidéo particulière, ou par les capteurs 71 à 7k.

Le circuit de traitement numérique 5 comporte encore k entrées pour des signaux s1 à sk provenant de k capteurs 71 à 7k et o sorties pour des signaux des commandes pour o actuateurs 81 à 8o.

On comprendra que la connexion entre le système de traitement 5 et les divers composants 43i, 4i, 7i, 8i peut être réalisée sous la forme d'un bus ou d'un réseau local câblé ou sans fil, et qu'il n'est donc pas nécessaire de prévoir des entrées ou des sorties physiquement distincts. On comprendra également que la fonction des tampons et des compteurs sera de préférence réalisée entièrement par logiciel plutôt qu'à l'aide de circuits électroniques distincts.

Le système de traitement numérique 5 comporte en outre une ou plusieurs cartes graphiques non représentées et munies de n sorties pour n systèmes de restitution 61 à 6n, par exemple n écrans, permettant de restituer n séquences vidéo o1 à on à partir des séquences vidéo acquises par les caméras 41 à 4m. Une ou plusieurs séquences vidéo traitées peuvent aussi être mémorisées dans une zone de mémoire 55 accessible de la même manière que les signaux d'entrée provenant des caméras. Il est par exemple possible de stocker dans la mémoire 55 des séquences vidéo de référence d'un entraîneur ou d'un champion auquel le sportif actuellement filmé pourra être comparé.

Le système de traitement numérique 5 comporte un processeur 50, ou un réseau de processeurs, pour exécuter un programme capable d'effectuer un traitement numérique en temps réel des séquences vidéo acquises par les caméras ou mémorisées précédemment. Un programme informatique stocké dans une portion de mémoire 51 permet à un opérateur d'éditer à l'avance un story-board, c'est-à-dire de définir avant le tournage la succession des plans enregistrés et restitués (pré-production). Le programme 51 permet notamment de définir la succession des plans sélectionnés et des traitements numériques effectués en fonction des différents signaux de déclenchement reçus. Le story-board peut de préférence être édité depuis un terminal 52 distant, par exemple depuis un laptop ou un PDA, permettant ainsi à un entraîneur ou à un opérateur de modifier les paramètres de production tout en restant proche du circuit 1.

En revenant à la figure 1, le story-board édité au moyen du logiciel 51 peut par exemple définir que la caméra 41 et l'écran 61 doivent être activés lorsque le déclencheur 31 indique un passage du véhicule 2 par l'embranchement 10. Le processeur 50 pourra aussi selon le story-board introduit commander les actuateurs 81, par exemple pour que la caméra 41 se déplace automatiquement (panning) tout en faisant un mouvement de zoom et en adaptant la netteté afin de cadrer le véhicule 1 sur une plus longue portion du circuit 1.

Le story-board peut aussi agir sur les compteurs 541 à 54l pour retarder l'action des signaux de déclenchement ti. Il est ainsi possible de programmer un délai prédéfini entre le signal t1 déclenché par le passage du véhicule 2 sur le déclencheur 31 et l'actionnement de la caméra 41 ou la sélection du signal vidéo acquis par cette caméra sur l'écran 61. Il est aussi possible de modifier l'adresse de lecture dans les tampons cycliques 53i lorsqu'un signal de déclenchement ti est reçu, de manière par exemple à lire des images prises avant la génération du signal de déclenchement (pré-roll). De cette manière, on peut par exemple commander la restitution automatique du départ de la course sur un des écrans dès qu'un déclencheur détecte que la ligne d'arrivée a été franchie.

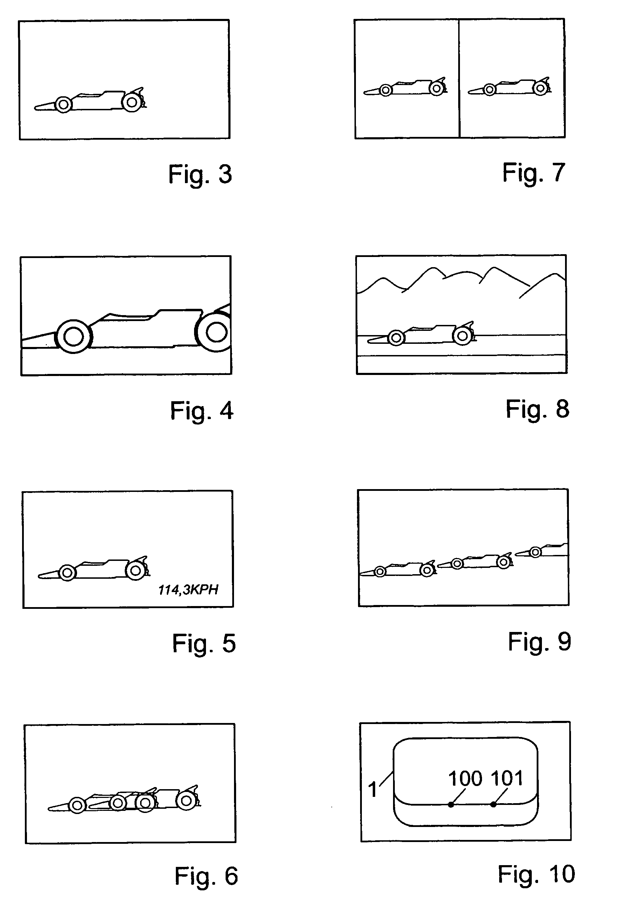

Différentes possibilités de traitement numériques effectué par le processeur 50 en fonction du story-board et des signaux de déclenchement sont illustrées schématiquement sur les figures 3 à 10. Sur la figure 3, la séquence vidéo vi acquise par une des caméras 4i est simplement retransmise telle quelle sur un des systèmes de restitution 6i défini dans le story-board. La séquence peut aussi être retardée ou avancée en modifiant l'adresse de lecture dans les tampons 53i. Il est aussi possible de programmer une restitution en ralenti ou en accéléré, par exemple en rééchantillonnant temporellement la séquence vidéo.

Sur la figure 4, un zoom a été effectué sous la commande du story-board. Le zoom peut être effectué soit en agissant sur un moteur de zoom 8i approprié d'une caméra, soit par traitement numérique (interpolation) d'une séquence vidéo.

Sur la figure 5, des données provenant d'un capteur 7i ont été superposées sur les images acquises par une des caméras. Les données superposées peuvent par exemple inclure un temps intermédiaire ou final, la vitesse du véhicule, le rythme cardiaque du sportif, etc.

Sur la figure 6, la séquence vidéo acquise par une des caméras est superposée à une séquence vidéo de référence préenregistrée dans une zone de mémoire 55. Il peut s'agir par exemple d'une séquence vidéo de l'entraîneur ou du sportif en tête de la course. Les deux séquences vidéo sont alignées spatialement - de manière à compenser des déplacements de caméra et pour que leur arrière plan corresponde - et peuvent être synchronisées temporellement, afin que les séquences vidéo correspondent à des instants équivalents depuis le début de la course ou depuis le passage par un déclencheur, et superposées sur une même portion d'écran. La superposition peut être améliorée en rééchantillonant temporellement une ou les deux séquences vidéo afin que leur durée corresponde. L'avant-plan est de préférence traité de manière différente de l'arrière-plan.

Sur la figure 7, deux séquences vidéo sont juxtaposées côte à côte sur le même écran (split-screen). Les deux séquences sont de préférence synchronisées temporellement afin de correspondre à des instants comparables depuis le début de la course ou depuis le passage par un déclencheur.

Sur la figure 8, une séquence vidéo acquise par une des caméras est combinée avec une représentation reconstruite en temps réel à partir d'une modélisation tridimensionnelle de la scène filmée. Dans cet exemple, l'arrière plan de la séquence vidéo a été remplacé par une image virtuelle calculée à partir d'une modélisation tridimensionnelle du circuit 1. Il est aussi possible de ne remplacer qu'une partie de l'image par une image virtuelle, par exemple de remplacer les panneaux d'affichage publicitaire par des panneaux virtuels. La reconstruction à partir de la modélisation tridimensionnelle peut s'effectuer sur la base de signaux de capteurs 7i reçus ou sur la base d'analyse de vidéo. Il serait par exemple possible d'extraire la position d'un sportif sur la base des séquences vidéo acquises.

Sur la figure 9, l'arrière plan de la séquence vidéo est inchangé tandis que l'objet mobile à l'avant-plan est traité de manière stroboscopique, c'est-à-dire que la position successive de cet objet à différents instants discrets i₁, i₂, iᵢ est affichée sur le même arrière plan. Lorsque la caméra se déplace entre les instants iᵢ pour suivre l'objet mobile, il est aussi possible de reconstituer une vue panoramique élargie de l'arrière plan à partir de vues partielles sur plusieurs trames successives. Les paramètres de l'effet stroboscopique, par exemple l'arrière-plan sélectionné ou la durée des intervalles entre les instants iᵢ, peuvent être commandés par le système de traitement numérique 5 et dépendre des informations fournies par les capteurs 7i et les déclencheurs 3i, par exemple de la vitesse de l'objet mobile indiquée par un détecteur de vitesse.

La figure 10 illustre une séquence vidéo calculée en temps réel à partir d'une modélisation bidimensionnelle ou tridimensionnelle du circuit, en tenant compte d'informations fournies par les déclencheurs 31 et les capteurs 7i. Sur cet exemple, la position de deux véhicules 100 et 101, déterminée par des capteurs 7i ou sur la base d'analyse de séquences vidéo, est affichée en temps réel sur une représentation du circuit. Selon le même principe, il est aussi possible de simuler à partir d'un modèle tridimensionnel de ce que voit le sportif en chaque instant le long de sa trajectoire.On comprendra que l'invention n'est pas limitée aux types de traitement indiqués ici à titre d'exemple illustratifs. Par ailleurs, plusieurs traitements peuvent être combinés. On pourrait par exemple juxtaposer (split-screen) ou superposer (fusion d'images) les images de deux sportifs et insérer sur la même séquence un graphisme généré automatiquement et illustrant en temps réel la position des deux sportifs.

Certains traitements numériques effectués par le processeur 50 peuvent être optimisés en utilisant des informations fournies par les capteurs 7i et les déclencheurs 3i. Par exemple, l'alignement spatial des séquences vidéo superposées dans l'exemple de la figure 6 peut utiliser des informations relatives à la position ou à l'orientation des caméras. La superposition elle-même apparaîtra plus naturelle si la luminance et/ou la chrominance des deux séquences vidéo est équilibrée en tenant compte des informations fournies par des capteurs de luminance ou de chrominance. De même, la synchronisation temporelle peut être basée sur des signaux de déclenchement, par exemple sur des signaux ti signalant le passage d'un véhicule à un endroit donné. L'extraction d'un élément en avant-plan, par exemple l'extraction du véhicule filmé pour le distinguer de l'arrière-plan, pourra utiliser des informations fournies par un détecteur de position 7i de type GPS par exemple.

Selon une caractéristique de l'invention, l'effet des signaux de déclenchement sur la production des séquences vidéo est définie à l'avance à l'aide d'un story-board édité au moyen d'un logiciel. Le story-board peut être constitué par un script, un programme ou un ensemble de données selon n'importe quel format éditable approprié pour définir l'action des déclencheurs.

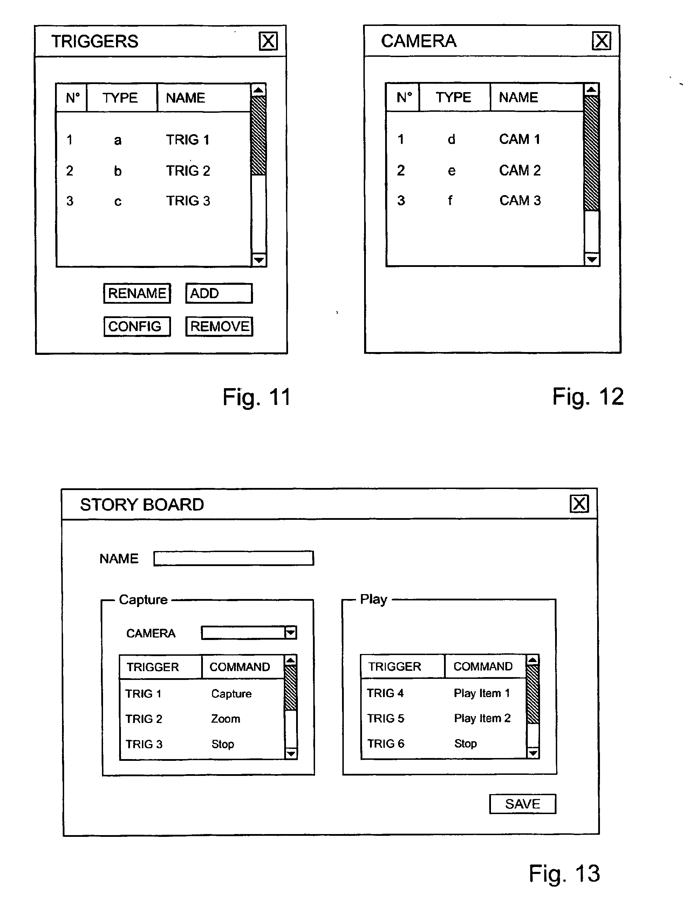

Les figures 11 à 14 illustrent des exemples de boîte de dialogue utilisées pour éditer le story-board à l'aide d'un logiciel 51 muni d'une interface graphique. La figure 11 montre une boîte de dialogue permettant de configurer les déclencheurs 3i présents dans le circuit. Cette boîte de dialogue permet d'introduire ou de supprimer des déclencheurs, de définir leur type, et de leur donner un nom. Le type de déclencheur a, b ou c correspond par exemple au modèle de déclencheur ou à un gestionnaire logiciel ("driver") associé à ce modèle. Un bouton Config permet de configurer l'action de ce déclencheur, par exemple pour définir sur quel port d'entrée du système 5 il est installé, si un délai doit être appliqué, quels sont ses paramètres de fonctionnement, etc.

La figure 12 montre une boîte de dialogue similaire permettant de définir quelles sont les caméras 4i connectées au système. Chaque caméra peut avoir un type particulier et se voir attribuer un nom. Le format des séquences vidéo fournies par les différentes caméras peut être variable.

D'autres boîtes de dialogue similaires permettent de configurer les capteurs 7i, les actuateurs 8i et les dispositifs de restitution 6i connectés au système. Dans une variante, il est aussi possible d'utiliser au moins certains éléments ne nécessitant pas de configuration ("plug-and-play"). L'architecture du système peut ainsi être entièrement modifiée et configurée en agissant sur ces boîtes de dialogue.

La figure 13 décrit un exemple de boîte de dialogue permettant d'éditer un story-board. Dans le cas d'un système de production utilisé pour l'entraînement, on pourra prévoir plusieurs story-boards correspondant à différents exercices effectués par les sportifs. Chaque story-board peut recevoir un nom indiqué dans le champ Name.

La partie Capture de la boîte de dialogue permet de définir les séquences acquises par chaque caméra 4i connectée au système. La caméra actuellement configurée est sélectionnée parmi les caméras connectées au moyen d'un menu déroulant (champ CAMERA). Un tableau permet ensuite de définir une succession de commandes de la caméra déclenchées par des événements détectés par les déclencheurs 3i. Dans l'exemple illustré, on définit que le signal de déclenchement Trig1 provoque le début d'une acquisition, puis le signal Trig2 commande un zoom de la caméra, et le signal Trig3 la fin de l'acquisition. Chaque commande peut de préférence être configurée en cliquant dessus pour accéder à une boîte de dialogue supplémentaire non illustrée et dépendant de la commande. Il est par exemple possible de définir au moyen de cette boîte de dialogue la vitesse d'acquisition (nombre de trames par secondes), la taille du tampon d'acquisition 53i (pre-roll), le retard positif ou négatif entre le signal de déclenchement et l'exécution de la commande, etc.

Il est aussi de préférence possible de définir les conditions de génération des signaux de déclenchement. On pourra par exemple définir au moyen d'une boîte de dialogue non illustré qu'un signal de déclenchement est généré après l'événement détecté par un déclencheur, ou seulement après la détection de plusieurs événements successifs, ou lorsque n'importe quel ensemble de conditions particulier du système est satisfait.

La partie Play de la boîte de dialogue permet de configurer les séquences restituées sur les divers dispositifs de restitution 6i. Sur l'exemple illustré, on définit que le signal de déclenchement Trig4 provoque la restitution de la séquence vidéo item1, le signal Trig5 provoque la restitution de la séquence vidéo item2 et le signal Trig6 provoque l'arrêt de la restitution. Chaque commande des systèmes de restitution peut de préférence être configurée au moyen d'une boîte de dialogue non représentée accessible en cliquant sur la commande. Il est par exemple possible de définir ainsi la vitesse de restitution, un retard positif ou négatif entre le signal de déclenchement et la restitution, etc.

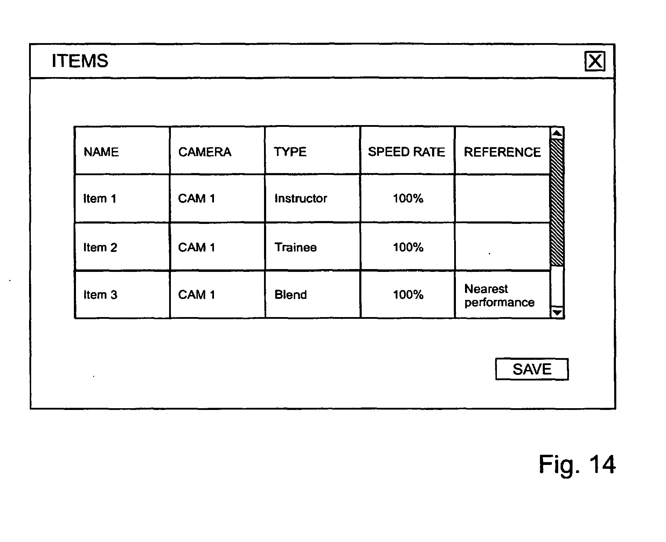

La figure 14 illustre une boîte de dialogue permettant de définir des séquences vidéo et leur donner un nom. Ces noms pourront être utilisés par exemple dans la boîte de dialogue illustrée sur la figure 13. Sur l'exemple illustré, la première ligne définit une séquence vidéo appelée Item1 et capturée par la caméra CAM1 lorsque l'instructeur Instructor est filmé à une vitesse normale (100%). La deuxième ligne définit une séquence vidéo similaire, mais correspondant à un élève Trainee. La troisième ligne correspond à une séquence obtenue par traitement numérique à partir de deux séquences acquises v1, v2, vm, dans ce cas à une fusion ("blend") des images fournies par la caméra CAM1 filmant à une vitesse normale avec une séquence vidéo de référence pré-enregistrée. Dans cet exemple, on demande d'utiliser pour la fusion la séquence vidéo de référence dans laquelle l'instructeur a la vitesse la plus proche de celle de l'élève actuellement filmé par la caméra CAM1.

Le système de l'invention permet ainsi de paramétrer complètement, au moyen d'un logiciel, les séquences vidéo qui sont acquises et restituées dans un système d'acquisition totalement paramétrable et produisant des séquences vidéo utilisée par exemple dans un circuit fermé.

Bien que les séquences vidéo acquises par les caméras 4i soient principalement destinées à être restituées immédiatement, il est aussi possible de les mémoriser pour les utiliser ultérieurement ou pour les comparer ou fusionner plus tard avec des images d'autres sportifs. Dans ce but, il sera avantageux de mémoriser les séquences vidéo produites par les caméras 4i, ou prétraitées par le système de traitement 5, en maintenant la correspondance avec les données associées fournies par les capteurs 7i et/ou par les déclencheurs 3i. Il sera ainsi possible de retrouver, à partir des données numériques mémorisées, les paramètres de la caméra (position,, zoom, etc) associés à chaque trame ou groupe de trames, ainsi que l'instant de réception des signaux de déclenchement ti associés aux séquences filmées. Ces données pourront être utilisées pour permettre l'analyse ultérieure des séquences vidéo ou leur fusion avec des séquences obtenues à un autre moment.

## Revendications

1. Système de production automatique de séquences vidéo, comprenant:
une ou plusieurs caméras (41, 42, 4m) pour acquérir chacune une séquence vidéo (v1, v2, vm),
un système de traitement numérique (5) pour commander l'acquisition desdites séquences vidéo (v1, v2, vm),
au moins un dispositif de restitution (61, 6n) desdites séquences vidéo numériques traitées,
au moins un déclencheur (31, 32, 3l) pour générer chacun un signal de déclenchement (t1, t2, tl) en réaction à un événement particulier en relation avec la scène filmée,
l'acquisition des séquences vidéo étant commandée par les signaux de déclenchement
**caractérisé en ce que** la restitution des séquences vidéo est indépendamment commandée par les signaux de déclenchement.

2. Système de production selon la revendication 1, dans lequel lesdites séquences vidéo (v1, v2, vm) sont restituées en temps réel ou en différé sur un circuit vidéo fermé.

3. Système de production selon l'une des revendications 1 ou 2, dans lequel ledit système de traitement numérique (5) est en outre capable d'effectuer un traitement numérique en temps réel des séquences vidéo acquises par lesdites caméras, le traitement numérique effectué étant également déterminé par lesdits signaux de déclenchement (t1, t2, tl).

4. Système de production selon l'une des revendications précédentes, dans lequel l'action déclenchée par lesdits signaux de déclenchement (t1, t2, tl) peut être paramétrée avant la prise de vue au moyen d'un programme informatique mémorisé dans une mémoire (51).

5. Système de production selon la revendication précédente, dans lequel ledit programme informatique permet de définir la succession des séquences vidéo acquises et des traitements numériques effectués en fonction des différents signaux de déclenchement (t1, t2, tm) reçus.

6. Système de production selon l'une des revendications précédentes, dans lequel la configuration des caméras (41, 42, 4m) et des déclencheurs (31, 32, 3l) peut être paramétrée au moyen d'un programme informatique mémorisé dans une mémoire (51).

7. Système de production selon l'une des revendications précédentes, comprenant au moins un compteur (541, 542, 54l) pour retarder l'action d'au moins un desdits signaux de déclenchement.

8. Système de production selon l'une des revendications précédentes, dans lequel lesdites séquences vidéo peuvent être acquises à partir d'une mémoire (55).

9. Système de production selon l'une des revendications précédentes, comprenant au moins une caméra munie d'au moins un des actuateurs (81, 82) suivants commandables par ledit système de traitement numérique:
- zoom motorisé;
- moteur de déplacement;
- système de mise au point motorisé;
- système de réglage d'ouverture motorisé.

10. Système de production selon l'une des revendications précédentes, comprenant au moins un tampon (531, 532, 53m) pour mémoriser temporairement les séquences vidéo d'au moins une desdites caméras, l'adresse de lecture dans ledit tampon pouvant être commandée par ledit système de traitement numérique (5).

11. Système de production selon la revendication précédente, dans lequel la taille dudit tampon peut être modifiée par ledit système de traitement numérique (5).

12. Système de production selon l'une des revendications 3 à 11, dans lequel ledit système de traitement numérique (5) comporte des routines pour modifier le rapport d'agrandissement d'une image lorsqu'un desdits signaux de déclenchement (t1, t2, tl) est reçu.

13. Système de production selon l'une des revendications 3 à 12, dans lequel ledit système de traitement numérique comporte des routines pour aligner, synchroniser et superposer deux séquences vidéo sur une même portion d'écran lorsqu'un desdits signaux de déclenchement (t1, t2, tl) est reçu.

14. Système de production selon l'une des revendications 3 à 13, dans lequel ledit système de traitement numérique comporte des routines pour aligner, synchroniser et superposer une séquence vidéo acquise en temps réel avec une séquence vidéo préenregistrée.

15. Système de production selon l'une des revendications 3 à 14, dans lequel ledit système de traitement numérique comporte des routines pour rééchantillonner temporellement une séquence vidéo.

16. Système de production selon l'une des revendications 3 à 15, dans lequel ledit système de traitement numérique comporte des routines pour synchroniser et juxtaposer deux séquences vidéo sur un même écran lorsqu'un desdits signaux de déclenchement (t1, t2, tl) est reçu.

17. Système de production selon l'une des revendications 3 à 16, dans lequel ledit système de traitement numérique comporte des routines pour décomposer au moins un élément d'une séquence vidéo de manière stroboscopique lorsqu'un desdits signaux de déclenchement (t1, t2, tl) est reçu, les paramètres de l'effet stroboscopique pouvant être commandés par ledit système de traitement numérique.

18. Système de production selon l'une des revendications 3 à 17, dans lequel ledit système de traitement numérique comporte des routines pour générer une séquence vidéo incluant des éléments reconstruits en temps réel à partir d'un modèle tridimensionnel.

19. Système de production selon l'une des revendications 3 à 18, dans lequel ledit système de traitement numérique comporte des routines pour superposer des données provenant d'un capteur sur ladite image lorsqu'un desdits signaux de déclenchement (t1, t2, tl) est reçu.

20. Système de production selon l'une des revendications 3 à 19, comportant au moins un capteur (71, 7k) permettant d'améliorer la qualité du traitement numérique effectué en fonction d'au moins un des paramètres parmi la liste suivante:
- luminance de la scène
- couleur de la lumière,
- mouvements d'au moins une desdites caméras.

21. Système de production selon l'une des revendications 1 à 20, dans lequel ledit système de traitement numérique comporte des routines pour modifier la séquence vidéo restituée lorsqu'un desdits signaux de déclenchement (t1, t2, tl) est reçu.

22. Système de production selon l'une des revendications 1 à 21, dans lequel ledit système de traitement numérique comporte des routines pour enregistrer une desdites séquences vidéo lorsqu'un desdits signaux de déclenchement (t1, t2, tl) est reçu.

23. Système de production selon l'une des revendications précédentes, dans lequel au moins un desdits déclencheurs génère un signal de déclenchement (t1, t2, tl) au passage d'un objet.

24. Système de production selon l'une des revendications 1 à 23, dans lequel au moins un desdits déclencheurs génère un signal de déclenchement (t1, t2, tl) lorsqu'un bruit ou son est reconnu.

25. Système de production selon l'une des revendications 1 à 24, dans lequel au moins un desdits déclencheurs (31, 32, 3l) génère un signal de déclenchement (t1, t2, tl) lorsque des conditions prédéfinies des signaux de sortie d'un détecteur de position sont remplies.

26. Système de production selon l'une des revendications 1 à 25, dans lequel au moins un desdits déclencheurs (31, 32, 3l) comporte un accéléromètre.

27. Système de production selon l'une des revendications 1 à 26, dans lequel au moins un desdits déclencheurs (31, 32, 3l) génère un signal de déclenchement basé sur une analyse d'image vidéo.

28. Système de production selon l'une des revendications 1 à 26, dans lequel au moins un desdits signaux de déclenchement est généré par logiciel lorsque une condition impliquant plusieurs déclencheurs (31, 32, 3l) est satisfaite. nouvelle revendication 29. du 20.02.2006

29. Procédé de production automatique de séquences vidéo à l'aide d'un système comportant une ou plusieurs caméras, un système de traitement numérique, au moins un dispositif de restitution de séquences vidéo et au moins un déclencheur (31, 32, 3l), comprenant les étapes suivantes:
acquisition d'une pluralité de séquences vidéo (v1, v2, vm) en fonction des signaux de déclenchement (t1, t2, tl) générés par lesdits déclencheurs (31, 32, 3l),
traitement numériques desdites séquences vidéo en fonction des signaux de déclenchement (t1, t2, tl) générés par lesdits déclencheurs (31, 32, 3l),
restitution en temps réel ou en différé desdites séquences vidéo sur ledit dispositif de restitution,
**caractérisé en ce que** ladite restitution est commandée indépendamment de l'acquisition par lesdits signaux de déclenchement (t1, t2, tl) générés par lesdits déclencheurs (31, 32, 3l).

30. Procédé selon la revendication 29, dans lequel les séquences vidéo acquises, les traitements numériques effectués et les données vidéo restituées en fonction desdits signaux de déclenchement (t1, t2, tl) sont paramétrés avant l'acquisition des séquences vidéo au moyen d'un logiciel.

31. Support de données informatiques (51) comportant un programme destiné à être exécuté par un système de traitement numérique (50) pour exécuter le procédé de la revendication 29.

## Claims

1. System for automatically producing video sequences, comprising:
one or several cameras (41, 42, 4m) for acquiring each a video sequence (v1, v2, vm),
a digital processing system for controlling (5) the acquisition of said video sequences (v1, v2, vm),
at least one restitution device (61, 6n) of said digital processed video sequences,
at least one trigger (31, 32, 3l) for generating each a trigger signal (t1, t2, tl) in reaction to a particular event relating to the filmed scene,
wherein the acquisition of the video sequences is commanded by said trigger signals,
**characterized in that** the restitution of the video sequences is independent commanded by said trigger signals.

2. The production system of claim 1, wherein said video sequences (v1, v2, vm) are restituted in real time or deferred on a closed video circuit.

3. The production system of claim 1 or 2, wherein said digital processing system (5) is furthermore capable of performing a digital processing operation in real time of the video sequences acquired by said cameras,
the digital processing operation performed being also determined by said trigger signals (t1, t2, tl).

4. The production system according to one of the preceding claims, wherein the action triggered by said trigger signals (t1, t2, tl) can be parameterized before the filming by means of a software stored in a memory (51).

5. The production system according to the preceding claim, wherein said software enables to define the succession of the acquired video sequences and of the performed digital processing operations according to the different trigger signals (t1, t2, tm) received.

6. The production system according to one of the preceding claims, wherein the configuration of the cameras (41, 42, 4m) and of the triggers (3, 32, 3l) can be parameterized by means of a software stored in a memory (51).

7. The production system according to one of the preceding claims, comprising at least one counter (541, 542, 54l) for delaying the action of at least one of said trigger signals.

8. The production system according to one of the preceding claims, wherein said video sequences can be acquired from a memory (55).

9. The production system according to one of the preceding claims, comprising at least one camera provided with at least one of the following actuators (81, 82) controlled by said digital processing system:
- motorized zoom,
- displacement motor,
- motorized focus system,
- motorized aperture adjustment system.

10. The production system according to one of the preceding claims, comprising at least one buffer memory (531, 532, 53m) for temporarily storing the video sequences of at least one of said cameras, the reading address in said buffer memory being capable of being controlled by said digital processing system (5).

11. The production system according to the preceding claim, wherein the size of said buffer memory can be modified by said digital processing system (5).

12. The production system according to one of the claims 3 to 11, wherein said digital processing system (5) comprises routines for modifying the image enlargement ratio when one of said trigger signals (t1, t2, tl) is received.

13. The production system according to one of the claims 3 to 12, wherein said digital processing system comprises routines for aligning, synchronizing and superimposing two video sequences on a same screen portion when one of said trigger signals (t1, t2, tl) is received.

14. The production system according to one of the claims 3 to 13, wherein said digital processing system comprises routines for aligning, synchronizing and superimposing a video sequence acquired in real time with a pre-recorded video sequence.

15. The production system according to one of the claims 3 to 14, wherein said digital processing system comprises routines for re-sampling temporally a video sequence.

16. The production system according to one of the claims 3 to 15, wherein said digital processing system comprises routines for synchronizing and juxtaposing two video sequences on a same screen when one of said trigger signals (t1, t2, tl) is received.

17. The production system according to one of the claims 3 to 16, wherein said digital processing system comprises routines for decomposing at least one element of a video sequence stroboscopically when one of said trigger signals (t1, t2, tl) is received, the parameters of the stroboscopic effect being capable of being controlled by said digital processing system.

18. The production system according to one of the claims 3 to 17, wherein said digital processing system comprises routines for generating a video sequence including elements reconstructed in real time from a three-dimensional model.

19. The production system according to one of the claims 3 to 18, wherein said digital processing system comprises routines for superimposing data issued from a sensor on said image when one of said trigger signals (t1, t2, tl) is received.

20. The production system according to one of the claims 3 to 19, comprising at least one sensor (71, 7k) enabling to improve the quality of the digital processing operation performed according to at least one of the parameters of the following list:
- luminance of the scene,
- light color (chrominance),
- movements of at least one of said cameras.

21. The production system according to one of the claims 1 to 20, wherein said digital processing system comprises routines for modifying the restituted video sequences when one of said trigger signals (t1, t2, tl) is received.

22. The production system according to one of the claims 1 to 21, wherein said digital processing system comprises routines for recording one of said video sequences when one of said trigger signals (t1, t2, tl) is received.

23. The production system according to one of the preceding claims, wherein at least one of said triggers generates a trigger signal (t1, t2, tl) at a passing object.

24. The production system according to one of the claims 1 to 23, wherein at least one of said triggers generates a trigger signal (t1, t2, tl) when a noise or sound is recognized.

25. The production system according to one of the claims 1 to 24, wherein at least one of said triggers (31, 32, 3l) generates a trigger signal (t1, t2, tl) when predefined conditions of the output signals of a position detector are fulfilled.

26. The production system according to one of the claims 1 to 25, wherein at least one of said triggers (31, 32, 3l) comprises an accelerometer.

27. The production system according to one of the claims 1 to 26, wherein at least one of said triggers (31, 32, 3l) generates a trigger signal based on a video image analysis.

28. The production system according to one of the claims 1 to 26, wherein at least one of said trigger signals is generated by software when a condition involving several triggers (31, 32, 3l) is fulfilled.

29. Method for automatically producing video sequences by means of a system comprising one or several cameras, a digital processing system, at least one device for restituting the video sequences and at least one trigger (31, 32, 3l), comprising the following steps:
acquisition of a plurality of video sequences (v1, v2, vm) according to the trigger signals (t1, t2, tl) generated by said triggers (31, 32, 3l),
digital processing of said video sequences according to the trigger signals (t1, t2, tl) generated by said triggers (31, 32, 3l),
restitution in real time or deferred of said video sequences on said restitution device,
**characterized in that** said restitution is commended independent from the acquisition by said trigger signals (t1, t2, tl) generated by said triggers (31, 32, 3l).

30. The method of claim 29, wherein the acquired video sequences, the performed digital processing operations and the restituted video data according to said trigger signals (t1, t2, tl) are parameterized before the acquisition of the video sequences by means of a software.

31. Computer data carrier (51) comprising a software intended to be run by a digital processing system (50) to execute the method of claim 29.

## Patentansprüche

1. System, um automatisch Videosequenzen zu produzieren, umfassend:
eine oder mehrere Kameras (41, 42, 4m), um mit jeder eine Videosequenz (v1, v2, vm) aufzunehmen,
ein digitales Verarbeitungssystem (5), um die Aufnahme von den besagten Videosequenzen (v1, v2, vm) zu kontrollieren,
mindestens ein Wiederherstellungsgerät (61, 6n) von den besagten digital verarbeiteten Videosequenzen,
mindestens einen Trigger (31, 32, 3l), um jeweils ein Triggersignal (t1, t2, tl) in Reaktion zu einem bestimmten Ereignis, das mit der gefilmten Szene in Verbindung gebracht wird, zu generieren,
wobei die Aufnahme einer Videosequenz von den besagten Triggersignalen befohlen wird,
**gekennzeichnet dadurch, dass** die Wiederherstellung der Videosequenzen unabhängig durch die Triggersignale befohlen wird.

2. Das Produktionssystem gemäss Anspruch 1, **dadurch gekennzeichnet**, in welchem besagte Videosequenzen (v1, v2, vm) in Echtzeit oder zeitlich verschoben in einem geschlossenen Videoschaltkreis wiederhergestellt werden.

3. Das Produktionssystem gemäss Anspruch 1 oder 2, in welchem das besagte digitale Verarbeitungssystem (5) weiter fähig ist, eine digitale Verarbeitung der Videosequenzen, die durch die Kameras aufgenommen werden, in Echtzeit durchzuführen,
wobei die durchgeführte digitale Verarbeitung auch durch die besagten Triggersignale (t1, t2, tl) bestimmt wird.

4. Das Produktionssystem gemäss einem der vorangegangen Ansprüche, in welchem die durch die Triggersignale (t1, t2, tl) getriggerte Aktion vor dem Filmen durch eine Software, die in einem Speicher (51) gespeichert ist, parametrisiert werden kann.

5. Das Produktionssystem gemäss dem vorangegangen Anspruch, in welchem die besagte Software es erlaubt, die Abfolge von den erworbenen Videosequenzen und von der durchgeführten digitalen Verarbeitung gemäss den verschiedenen empfangenen Triggersignalen (t1, t2, tm) zu definieren.

6. Das Produktionssystem gemäss einem der vorangegangen Ansprüche, in welchem die Konfiguration der Kameras (41, 42, 4m) und der Trigger (31, 32, 3l) durch die Benutzung einer Software, die in einem Speicher (51) gespeichert ist, parametrisiert werden kann.

7. Das Produktionssystem gemäss einem der vorangegangen Ansprüche, umfassend mindestens einen Zähler (541, 542, 54l), um die Aktion von mindestens einem der besagten Triggersignalen zu verzögern.

8. Das Produktionssystem gemäss einem der vorangegangen Ansprüche, in welchem die besagte Videosequenz von einem Speicher (55) erworben werden kann.

9. Das Produktionssystem gemäss einem der vorangegangen Ansprüche, umfassend mindestens eine Kamera, welche mit mindestens einem der folgenden Stellgliedern (81, 82) durch das besagte digitale Verarbeitungssystem kontrolliert werden:
- Motorisierter Zoom,
- Verschiebungsmotor,
- Motorisiertes Fokussystem,
- Motorisiertes Anpassungssystem der Öffnung.

10. Das Produktionssystem gemäss einem der vorangegangen Ansprüche, umfassend mindestens einen Bufferspeicher (531, 532, 53m), um die Videosequenzen von mindestens einer der Kameras temporär zu speichern, wobei die Leseadresse in dem besagten Bufferspeicher fähig ist, durch das besagte digitale Verarbeitungssystem (5) kontrolliert zu werden.

11. Das Produktionssystem gemäss dem vorangegangen Anspruch, in welchem die Grösse des besagten Bufferspeichers durch das digitale Verarbeitungssystem (5) verändert werden kann.

12. Das Produktionssystem gemäss einem der Ansprüche 3 bis 11, in welchem besagtes digitales Verarbeitungssystem (5) Routinen umfasst, um das Bildvergrösserungsverhältnis zu modifizieren, wenn eins der besagten Triggersignale (t1, t2, tl) empfangen wird.

13. Das Produktionssystem gemäss einem der Ansprüche 3 bis 12, in welchem besagtes digitales Verarbeitungssystem (5) Routinen umfasst, um zwei Videosequenzen auf einem gleichen Bildschirmteil auszurichten, zu synchronisieren und übereinander zu legen, wenn eins der besagten Triggersignale (t1, t2, tl) empfangen wird.

14. Das Produktionssystem gemäss einem der Ansprüche 3 bis 13, in welchem besagtes digitales Verarbeitungssystem Routinen umfasst, um eine Videosequenz, die in Echtzeit mit einer vorab aufgenommenen Videosequenz erworben wird, auszurichten, zu synchronisieren und übereinander zu legen.

15. Das Produktionssystem gemäss einem der Ansprüche 3 bis 14, in welchem besagtes digitales Verarbeitungssystem Routinen umfasst, um eine Videosequenz temporär wieder abzutasten.

16. Das Produktionssystem gemäss einem der Ansprüche 3 bis 15, in welchem besagtes digitales Verarbeitungssystem Routinen umfasst, um zwei Videosequenzen auf demselben Bild zu synchronisieren und entgegenzustellen, wenn eins der besagten Triggersignale (t1, t2, tl) empfangen wird.

17. Das Produktionssystem gemäss einem der Ansprüche 3 bis 16, in welchem besagtes digitales Verarbeitungssystem Routinen umfasst, um mindestens ein Element der Videosequenz stroboskopmässig zu zerlegen, wenn eins der besagten Triggersignale (t1, t2, tl) empfangen wird, wobei die Parameter des Stroboskopeffekts fähig sind, durch das digitale Verarbeitungssystem kontrolliert zu werden.

18. Das Produktionssystem gemäss einem der Ansprüche 3 bis 17, in welchem besagtes digitales Verarbeitungssystem Routinen umfasst, um eine Videosequenz zu generieren, welche Elemente enthält, die in Echtzeit von einem drei-dimensionalen Modell rekonstruiert wurden.

19. Das Produktionssystem gemäss einem der Ansprüche 3 bis 18, in welchem das digitale Verarbeitungssystem Routinen umfasst, um Daten, die von einem Sensor herausgegeben werden, auf den besagten Bildern übereinander zu legen, wenn eines der besagten Triggersignale (t1, t2, tl) empfangen wird.

20. Das Produktionssystem gemäss einem der Ansprüche 3 bis 19, umfassend mindestens einen Sensor (71, 7k), welcher es erlaubt, die Qualität der durchgeführten digitalen Verarbeitung gemäss mindestens einem der Parameter der folgenden Liste zu verbessern:
- Beleuchtung der Szene
- Lichtfarbe
- Bewegung von mindestens einer der besagten Kameras.

21. Das Produktionssystem gemäss einem der Ansprüche 1 bis 20, in welchem das digitale Verarbeitungssystem Routinen umfasst, um eine der wiederhergestellten Videosequenzen zu verändern, wenn eines der besagten Triggersignale (t1, t2, tl) empfangen wird.

22. Das Produktionssystem gemäss einem der Ansprüche 1 bis 21, in welchem das digitale Verarbeitungssystem Routinen umfasst, um eine der besagten Videosequenzen aufzunehmen, wenn eines der besagten Triggersignale (t1, t2, tl) empfangen wird.

23. Das Produktionssystem gemäss einem der vorangegangen Ansprüche, in welchem mindestens einer der besagten Trigger ein Triggersignal (t1, t2, tl) generiert, wenn ein Objekt vorbeizieht.

24. Das Produktionssystem gemäss einem der Ansprüche 1 bis 23, in welchem mindestens einer der besagten Trigger ein Triggersignal (t1, t2, tl) generiert, wenn ein Geräusch oder ein Sound erkannt wird.

25. Das Produktionssystem gemäss einem der Ansprüche 1 bis 24, in welchem mindestens einer der besagten Trigger (31, 32, 31) ein Triggersignal (t1, t2, tl) generiert, wenn vorbestimmte Konditionen von Ausgangssignalen von einem Positionsdetektor erfüllt sind.

26. Das Produktionssystem gemäss einem der Ansprüche 1 bis 25, in welchem in welchem einer der besagten Trigger (31, 32, 3l) ein Beschleunigungsmessgerät umfasst.

27. Das Produktionssystem gemäss einem der Ansprüche 1 bis 26, in welchem mindestens einer der besagten Trigger (31, 32, 3l) ein Triggersignal basierend auf einer Videobildanalyse generiert.

28. Das Produktionssystem gemäss einem der Ansprüche 1 bis 26, in welchem mindestens eins der Triggersignale durch Software generiert wird, wenn eine Bedingung, die mehrere Trigger (31, 32, 3l) involviert, erfüllt ist.

29. Verfahren, um automatisch unabhängig mit Hilfe eines Systems, welches ein oder mehrere Kameras umfasst, Videosequenzen zu produzieren, ein digitales Verarbeitungssystem, mindestens ein Gerät, um die Videosequenzen wiederherzustellen und mindestens einen Trigger (31, 32, 3l), umfassend folgende Schritte:
Aufnahme von einer Vielzahl von Videosequenzen (v1, v2, vm) in Funktion von Triggersignalen (t1, t2, tl) generiert durch die besagten Trigger (31, 32, 3l),
digitale Verarbeitung der besagten Videosequenzen gemäss den Triggersignalen (t1, t2, tl) generiert durch die besagten Trigger (31, 32, 3l),
Wiederherstellung der Videosequenzen in Echtzeit oder zeitlich verschoben auf dem Wiederherstellungsgerät,
**gekennzeichnet dadurch, dass** besagte Wiederherstellung der Videosequenzen unabhängig von der Aufnahme durch die Triggersignale (t1, t2, tl) generiert durch die besagten Trigger (31, 32, 3l) befohlen wird.

30. Das Verfahren gemäss Anspruch 29, in welchem die erworbenen Videosequenzen, die durchgeführte digitale Verarbeitung und die gemäss Triggersignalen (t1, t2, tl) wiederhergestellten Videodaten vor der Aufnahme der Videosequenzen durch eine Software parametrisiert werden.

31. Computerdatenträger (51) umfassend eine Software, die geeignet ist, um auf einem digitalen Verarbeitungssystem (50) abzulaufen, um das Verfahren von Anspruch 29 durchzuführen.
